# EUROPEAN PATENT APPLICATION

(11) **EP 4 672 761 A1**
(43) Date of publication of application: **31.12.2025**
(21) Application number: 24803586.7
(22) Date of filing: 18.03.2024
(51) Int. Cl.: H04N 21/422, H04N 21/436, H04N 21/443, G16Y 40/30

(54) **DISPLAY DEVICE, AND METHOD FOR CONTROLLING IOT DEVICE USING SAME**

(30) Priority: 08.05.2023 KR 20230059288
(71) Applicant: SAMSUNG ELECTRONICS CO., LTD., Yeongtong-gu, Suwon-si, Gyeonggi-do 16677 (KR)
(72) Inventor: LEE, Sangeun, Suwon-si Gyeonggi-do 16677 (KR); KIM, Boram, Suwon-si Gyeonggi-do 16677 (KR); LEE, Suri, Suwon-si Gyeonggi-do 16677 (KR); SHIN, Gyucheol, Suwon-si Gyeonggi-do 16677 (KR)
(74) Representative: Appleyard Lees IP LLP
(86) International application number: PCT/KR2024/003357
(87) International publication number: WO 2024/232530

(57) **Abstract**

A display device according to embodiments of the present invention may comprise memory storing at least one command, and at least one processor executing the at least one command. The at least one processor can: set at least one control action corresponding to at least one function key input; detect the at least one function key input on the basis of at least one user input received from a control device; determine the operation mode at the time when the at least one function key input was detected; and perform the at least one control action on the basis of the operation mode and the at least one function key input. The at least one control action may include at least one of a first control action for controlling a displayed image or a second control action for controlling at least one IoT device.

## Description

### [Technical Field]

Various embodiments of the disclosure relate to a display device that performs control actions based on a user input and an IoT device control method using the same.

### [Background Art]

A display device is a device having a function of displaying an image that a user may view. A user may watch broadcasts through the display device. The display device displays on a display a broadcast selected by the user among broadcast signals transmitted from a broadcasting station.

Digital broadcasting means broadcasting that transmits digital video and audio signals. Compared to analog broadcasting, digital broadcasting has strong resistance to external noise, resulting in less data loss, and is advantageous for error correction, has high resolution, and provides clear images. Further, unlike analog broadcasting, digital broadcasting enables bidirectional services.

Further, recently, smart TVs that provide various contents in addition to digital broadcasting functions are being provided. A smart TV aims not to operate passively according to selection of a user, but to analyze and provide what the user wants without user manipulation.

An Internet of things (IoT) system requires a certain hub for monitoring the status of IoT devices and transferring the monitored information to a server. For example, a display device may provide an IoT hub function of the IoT system.

Meanwhile, since the display device may perform the IoT hub function only when the power is turned on, when the power of the display device is turned off, the IoT system needs a separate application to perform the IoT hub function.

### [Disclosure of Invention]

### [Technical Problem]

Various embodiments of the disclosure may provide a display device that controls an image being displayed according to function key inputs in a normal mode and controls an IoT device according to function key inputs in a standby mode, and an IoT device control method using the same.

### [Solution to Problems]

A display device according to embodiments of the disclosure may include a memory configured to store at least one instruction, and at least one processor configured to execute the at least one instruction. The at least one processor may set at least one control action corresponding to at least one function key input. The at least one processor may detect the at least one function key input based on at least one user input received from a control device. The at least one processor may determine an operation mode at a time when the at least one function key input is detected. The at least one processor may perform the at least one control action based on the operation mode and the at least one function key input. The at least one control action may include at least one of a first control action for controlling an image being displayed and a second control action for controlling at least one IoT device.

In an embodiment, the operation mode may include at least one of a normal mode for displaying an image and a standby mode for not displaying an image.

In an embodiment, the at least one processor may perform the first control action based on the at least one function key input in the normal mode. The at least one processor may perform the second control action based on the at least one function key input in the standby mode.

In an embodiment, the at least one processor may match the at least one IoT device to the at least one function key input. The at least one processor may map a control value to the at least one function key input.

In an embodiment, the control value may include a basic control value and an additional control value for the at least one IoT device. The basic control value may include power control of the at least one IoT device. The additional control value may include at least one of temperature control, direction control, intensity control, and mode control of the at least one IoT device.

In an embodiment, the at least one processor may map power control of the at least one IoT device to the at least one function key input. The at least one processor may map at least one of temperature control, direction control, intensity control, and mode control of the at least one IoT device to at least one of a direction key input, a channel key input, and a volume key input.

In an embodiment, the at least one processor may perform a power control action for the at least one IoT device based on the at least one function key input in a standby mode.

In an embodiment, the at least one processor may perform at least one of a temperature control action, a direction control action, an intensity control action, and a mode control action for the at least one IoT device based on at least one of a direction key input, a channel key input, and a volume key input in the standby mode.

A control device according to embodiments of the disclosure may include a memory configured to store at least one instruction, and at least one processor configured to execute the at least one instruction. The at least one processor may detect user action for at least one of a function key, a direction key, a channel key, and a volume key. The at least one processor may generate a user input including at least one of a function key input, a direction key input, a channel key input, and a volume key input based on the user action. The at least one processor may output the user input to a display device. The display device may perform at least one control action based on the function key input. The at least one control action may include at least one of a first control action for controlling an image being displayed in a normal mode and a second control action for controlling at least one IoT device in a standby mode.

In an embodiment, the function key input may be mapped to power control of the at least one IoT device. At least one of the direction key input, the channel key input, and the volume key input may be mapped to at least one of temperature control, direction control, intensity control, and mode control of the at least one IoT device.

In an embodiment, the at least one processor may control power of the at least one IoT device based on the user action for the function key in the standby mode.

In an embodiment, the at least one processor may control at least one of a temperature, a direction, an intensity, and a mode of the at least one IoT device based on the user action for at least one of the direction key, the channel key, and the volume key in the standby mode.

An IoT device control method according to embodiments of the disclosure may include setting at least one control action corresponding to at least one function key input, detecting the at least one function key input based on at least one user input received from a control device, determining an operation mode at a time when the at least one function key input is detected, and performing the at least one control action based on the operation mode and the at least one function key input. The at least one control action may include at least one of a first control action for controlling an image being displayed and a second control action for controlling at least one IoT device.

In an embodiment, the operation mode may include at least one of a normal mode for displaying an image and a standby mode for not displaying an image.

In an embodiment, the performing of the at least one control action may include performing the first control action based on the at least one function key input in the normal mode, and performing the second control action based on the at least one function key input in the standby mode.

In an embodiment, the setting of the at least one control action may include matching the at least one IoT device to the at least one function key input, and mapping a control value to the at least one function key input.

In an embodiment, the control value may include a basic control value and an additional control value for the at least one IoT device. The basic control value may include power control of the at least one IoT device. The additional control value may include at least one of temperature control, direction control, intensity control, and mode control of the at least one IoT device.

In an embodiment, the setting of the at least one control action may include mapping power control of the at least one IoT device to the at least one function key input, and mapping at least one of temperature control, direction control, intensity control, and mode control of the at least one IoT device to at least one of a direction key input, a channel key input, and a volume key input.

In an embodiment, the performing of the at least one control action may include performing a power control action for the at least one IoT device based on the at least one function key input in a standby mode.

In an embodiment, the performing of the at least one control action may include performing at least one of a temperature control action, a direction control action, an intensity control action, and a mode control action for the at least one IoT device based on at least one of a direction key input, a channel key input, and a volume key input in the standby mode.

### [Advantageous Effects]

According to various embodiments of the disclosure, the display device according to the disclosure and the IoT device control method using the same may control an image being displayed according to function key inputs of a control device in a normal mode and control an IoT device according to function key inputs of the control device in a standby mode.

Therefore, the display device according to the disclosure and the IoT device control method using the same may constantly provide IoT hub functions regardless of the operation mode, thereby extending the utilization range of the control device and maximizing the convenience of the IoT hub function of the display device.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [Brief Description of Drawings]

FIG. 1 illustrates an IoT system according to an embodiment;
FIG. 2 is a block diagram illustrating a configuration of a display device according to an embodiment;
FIG. 3 illustrates a configuration of a control device according to an embodiment;
FIG. 4 is a flowchart illustrating operations of a display device according to an embodiment;
FIG. 5 illustrates an operation of mapping basic control values to function key inputs according to an embodiment;
FIG. 6 illustrates an operation of mapping additional control values to additional key inputs according to an embodiment;
FIG. 7 illustrates operation modes of a display device according to an embodiment;
FIG. 8 illustrates an operation of a display device based on function key inputs in a normal mode according to an embodiment;
FIG. 9 illustrates an operation of a display device based on function key inputs in a standby mode according to an embodiment; and
FIG. 10 illustrates a notification function of an IoT system according to an embodiment.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

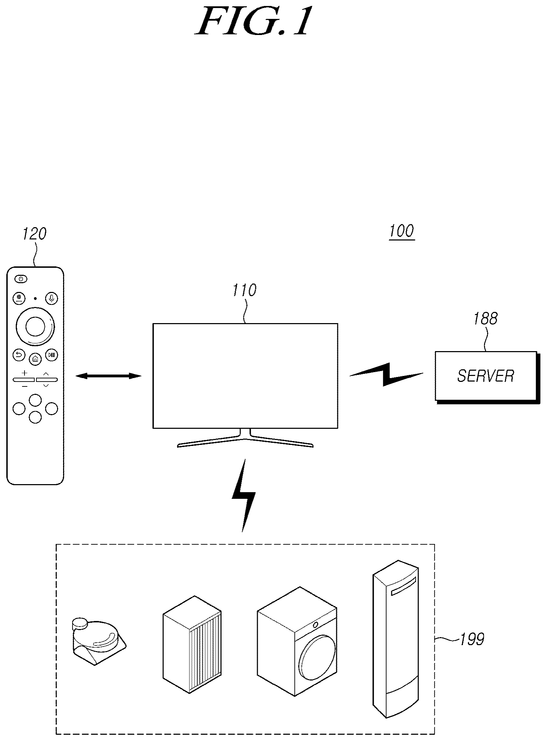

FIG. 1 illustrates an IoT system 100 according to an embodiment.

Referring to FIG. 1, the IoT system 100 may include a display device 110, a control device 120, a server 188, and at least one IoT device 199.

In an embodiment, the display device 110 may display an image based on input data. For example, the display device 110 may be a TV that displays images, but this is merely an example of the display device 110, and the display device 110 may be implemented as an electronic device including at least one display unit. For example, the display device 110 may be implemented as various electronic devices such as a mobile phone, a tablet PC, a digital camera, a camcorder, a laptop computer, a tablet PC, a desktop, an electronic book terminal, a digital broadcasting terminal, a personal digital assistant (PDA), a portable multimedia player (PMP), navigation, an MP3 player, a wearable device, or the like. Further, the display device 110 may be fixed or mobile and may be a digital broadcasting receiver capable of receiving digital broadcasts.

For example, the display device 110 may be implemented as not only a flat display device but also a curved display device having a screen with curvature or a flexible display device with adjustable curvature. For example, the output resolution of the display device 110 may include high definition (HD), full HD, ultra HD, or a resolution clearer than ultra HD.

In an embodiment, the display device 110 may perform an IoT hub function. For example, the display device 110 may perform not only broadcast reception functions, image processing functions, and image display functions but also IoT hub functions. Specifically, the display device 110 may receive status information of IoT devices from at least one IoT device 199 through short-range communication (e.g., Zigbee).

The display device 110 may generate sensing data for the IoT device 199 based on the status information of at least one IoT device. The display device 110 may display at least one IoT device 199 based on the sensing data. The display device 110 may control at least one IoT device 199 based on a user input.

The at least one IoT device 199 may include general devices (or things) to which the IoT is applied. For example, the IoT device 199 may include at least one of a temperature sensor, a humidity sensor, an acoustic sensor, a motion sensor, a proximity sensor, a gas detection sensor, a heat detection sensor, a refrigerator, an air conditioner, closed-circuit television (CCTV), a TV, a washer, a cleaner, an oven, a dehumidifier, a lamp, and a fire alarm. However, the IoT device 199 of the disclosure is not limited thereto.

The server 188 may update status information of at least one IoT device 199 through a network. The server 188 may receive status information of at least one IoT device 199 from the display device 110 through a network. For example, the display device 110 may control at least one IoT device 199 and transmit to the server 188 status information and operation information of at least one IoT device 199 through a network. The server 188 may update status information and operation information of at least one IoT device 199 to at least one application (e.g., Smart Things).

The network used in the server 188 may include both a wired network and a wireless network. The wired network may include a cable network, a telephone network, or the like, and the wireless network may include all networks that transmit and receive signals through radio waves. The wired network and the wireless network may be connected to each other.

For example, the network may include a wide area network (WAN) such as the Internet, a local area network (LAN) formed around an access point (AP), and a short-range wireless network that does not pass through the AP. The short-range wireless network may include, but is not limited to, Bluetooth^{™} (IEEE 802.15.1), Zigbee (IEEE 802.15.4), Wi-Fi Direct, near field communication (NFC), and Z-wave.

In an embodiment, the control device 120 may output a user input to the display device 110. The control device 120 may be connected to the display device 110 through a wireless communication network. For example, the control device 120 may be positioned within a certain distance from the display device 110 and perform communication with the display device 110 through a Bluetooth low energy (BLE) communication network. For example, the control device 120 may generate a user input based on a user action and transmit the user input to the display device 110 through a BLE communication network.

For example, the control device 120 may be a remote control, smartphone, tablet PC, PC, smart TV, mobile phone, personal digital assistant (PDA), laptop, media player, micro server, global positioning system (GPS) device, electronic book terminal, digital broadcasting terminal, navigation, kiosk, MP3 player, digital camera, and other mobile or non-mobile computing devices, but the disclosure is not limited thereto. Further, the control device 120 may be a wearable device equipped with communication functions and data processing functions.

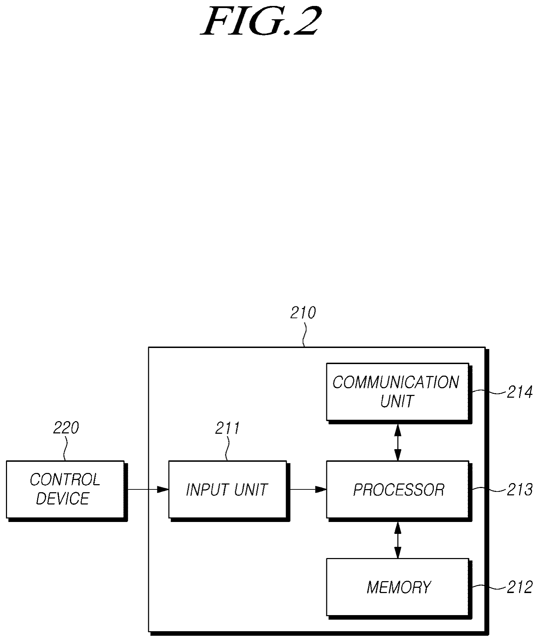

FIG. 2 is a block diagram illustrating a configuration of a display device 210 according to an embodiment. For example, the display device 210 of FIG. 2 may be the display device 110 of FIG. 1.

Referring to FIG. 2, the display device 210 may include an input unit 211, a memory 212, a processor 213, and a communication unit 214.

In an embodiment, the input unit 130 may receive a user input output from a control device 220 (e.g., the control device 120 of FIG. 1). For example, the input unit 130 may receive from the control device 220 a user input including at least one of a power key input for turning on or off the power of the display device 210, a direction key input for controlling selection movement, a channel key input for selecting channels, a volume key input for adjusting the volume level, and a predetermined function key input. The input unit 211 may transfer the received user input to the processor 213.

In an embodiment, the memory 212 may include at least one of a non-volatile memory device and a volatile memory device. For example, the non-volatile memory device may store various data and software (e.g., operating system, application programs, etc.) for driving and controlling the display device 210. The non-volatile memory device may store an operating system, a first application program, and a second application program. The first application program may be a program that performs functions of receiving status information of IoT devices from IoT devices and transmitting the received information to a server. Further, the second application program may be a program that performs main functions of the display device 210 (e.g., broadcast receiving function, image processing function, image display function, etc.). For example, the non-volatile memory device may be a device in which stored data is not deleted even when power supply is interrupted. For example, the non-volatile memory device may include flash memory devices such as NAND flash and NOR flash.

The non-volatile memory device may be controlled by a controller. The controller may receive control commands from the processor 213 to store data in the non-volatile memory device or read data stored in the non-volatile memory device.

In an embodiment, the processor 213 may load software stored in the non-volatile memory device into the volatile memory device to operate the software.

The processor 213 may access data related to software (e.g., operating system and application programs, etc.) loaded in the volatile memory device. The volatile memory device is a device in which stored data is deleted when power supply is interrupted, and the volatile memory device may include static RAM (SRAM), dynamic RAM (DRAM), etc.

For example, the volatile memory device may include a first volatile memory device and a second volatile memory device. The operating system and the first application program may be loaded and executed in the first volatile memory device, and the second application program may be loaded and executed in the second volatile memory device.

The processor 213 may control the overall operation of the display device 210 and signal flow between internal components of the display device 210, and may process data. For example, the processor 213 may be a central processing unit (CPU) that controls the operation of software (e.g., operating system (OS) and application programs) stored in the display device 210.

For example, the processor 213 may load software stored in the non-volatile memory device into the volatile memory device to operate it, and may control the display device 210 by user commands received via the input unit 130 or by the operated software.

Further, the processor 213 may include a graphic processing unit (GPU) (not illustrated) for processing graphics corresponding to video. The processor 213 may be implemented as a system on chip (SoC) integrating a core and GPU. For example, the processor 213 may include a single core, a dual core, a triple core, a quad core, and multiple cores thereof.

The processor 213 may include a plurality of processors. For example, the processor 213 may include a main processor and a sub processor operating in a standby mode.

In an embodiment, the communication unit 214 may connect the display device 210 to external devices (e.g., server, IoT devices, etc.) under the control of the processor 213. The processor 213 may transmit/receive content to/from external devices connected via the communication unit 214, download applications from external devices, or perform web browsing. The communication unit 214 may communicate with external devices using at least one of Bluetooth, near field communication, Wi-Fi, Zigbee, Z-WAVE, infrared data association (IrDA) communication, Wi-Fi direct (WFD), ultra-wideband (UWB), Ant+ communication, and Bluetooth low energy (BLE).

In an embodiment, the communication unit 214 may receive status information of IoT devices from IoT devices. The communication unit 214 may transmit sensing data generated based on the status information to an external server. In this case, communication with IoT devices may be performed using Zigbee, Z-WAVE, etc., and communication with external servers may be performed using Bluetooth, Wi-Fi, etc.

Meanwhile, in an embodiment, the control device 220 may be implemented as various types of devices for controlling the display device 210, such as a remote control or smartphone.

Further, the control device 220 may control the display device 210 using short-range communication including infrared or Bluetooth. The control device 220 may control functions of the display device 210 using at least one of a certain key, a touchpad, a microphone capable of receiving the user's voice, and a sensor capable of motion recognition of the control device 220, as provided.

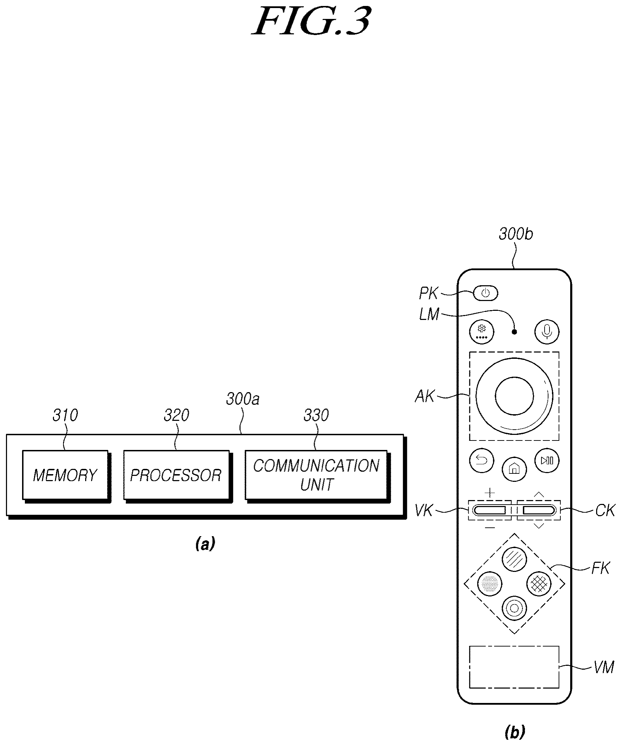

FIG. 3 illustrates a configuration of a control device according to an embodiment. For example, the control devices 300a and 300b of FIG. 3 may be the control device 220 of FIG. 2.

Referring to FIG. 3(a), the control device 300a may include a processor 320, a memory 310, and a communication unit 330. The components illustrated in FIG. 3(a) illustrates components for describing an embodiment of the control device 300a according to the disclosure, and other components for performing control functions of the control device may be added in addition to the illustrated components, and the illustrated components may be omitted.

The memory 310 according to an embodiment is a storage medium used by the control device 300a and may store data such as at least one instruction or setting information corresponding to at least one program. The program may include an operating system (OS) program and various application programs.

In an embodiment, the memory 310 may include at least one type of storage medium of flash memory types, hard disk types, multimedia card micro types, card types of memories (e.g., secure digital (SD) or extreme digital (XD) memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

The communication unit 330 according to an embodiment may perform wired/wireless communication between the control device 300a and external devices (e.g., display device). For example, the communication unit 330 may transmit a user input for controlling IoT devices to a display device based on user action.

In an embodiment, the communication unit 330 may include a wireless communication unit (e.g., cellular communication module, short-range wireless communication module, or global navigation satellite system (GNSS) communication module) or a wired communication unit. The communication unit 330 may communicate with external devices (e.g., client device, identity and access management (IAM) server, billing server, cloud server, interplanetary file system (IPFS) server) through a network (e.g., legacy cellular network, 5G network, next-generation communication network, Internet, or telecommunication network such as computer network (e.g., local area network (LAN) or wide area network (WAN)).

In an embodiment, the communication unit 330 may support 5G networks and next-generation communication technologies, e.g., new radio (NR) access technology. The NR access technology may support enhanced mobile broadband (eMBB), massive machine type communications (mMTC), or ultra-reliable and low-latency communications (URLLC). For example, the communication unit 330 may support high frequency bands (e.g., mmWave band) to achieve high data transmission rates. The communication unit 330 may support various technologies for securing performance in high frequency bands (e.g., beamforming, massive multiple-input and multiple-output (MIMO), full dimensional MIMO (FD-MIMO), array antenna, analog beam-forming, or large scale antenna).

In an embodiment, the communication unit 330 may support various requirements specified in the control device 300a, external devices (e.g., display device), or network systems.

The processor 320 according to an embodiment may, e.g., execute software (e.g., program) to control at least one other component (e.g., hardware or software component) of the control device 300a, connected to the processor 320, and may perform various data processing or operations.

In an embodiment, the processor 320 may, as at least a portion of data processing or operation, store instructions or data received from other components (e.g., communication unit 330) in volatile memory, process instructions or data stored in volatile memory, and store result data in non-volatile memory.

In an embodiment, the processor 320 may include a main processor (e.g., central processing unit or application processor) or an auxiliary processor (e.g., graphic processing unit, neural processing unit (NPU), or communication processor) that may operate independently from or together with the main processor.

For example, the processor 320 may generate a user input based on user action and control the display device according to the user input.

Referring to FIG. 3(b), the control device 300b may include at least one of a power key (PK) for turning on or off the power of the display device, a direction key (AK) for controlling selection movement of an image being displayed, a channel key (CK) for selecting channels of the display device, a volume key (VK) for adjusting volume level of the display device, and a function key (FK) for performing predetermined functions. Further, the control device 300b may include at least one of an LED module (LM) and a vibration module (VM) that provide predetermined notifications to the user.

The control device 300b may detect user action on at least one of the function key (FK), direction key (AK), channel key (CK), and volume key (VK). For example, a user may select or repeatedly press at least one of the function key (FK), direction key (AK), channel key (CK), and volume key (VK).

The control device 300b may generate a user input including at least one of function key input, direction key input, channel key input, and volume key input based on the user action. The control device 300b may output the user input to the display device. For example, the control device 300b may control the display device by outputting the user input to the display device through a BLE communication network.

The control device 300b may perform notification functions based on at least one of the LED module (LM) and vibration module (VM) provided. The LED module (LM) may include at least one of a red LED, a green LED, and a blue LED. For example, the control device 300b may provide visual feedback to the user by outputting predetermined light through the LED module (LM). The vibration module (VM) may include a vibration motor and a driving circuit. For example, the control device 300b may provide tactile feedback to users by generating predetermined vibration via the vibration module (VM).

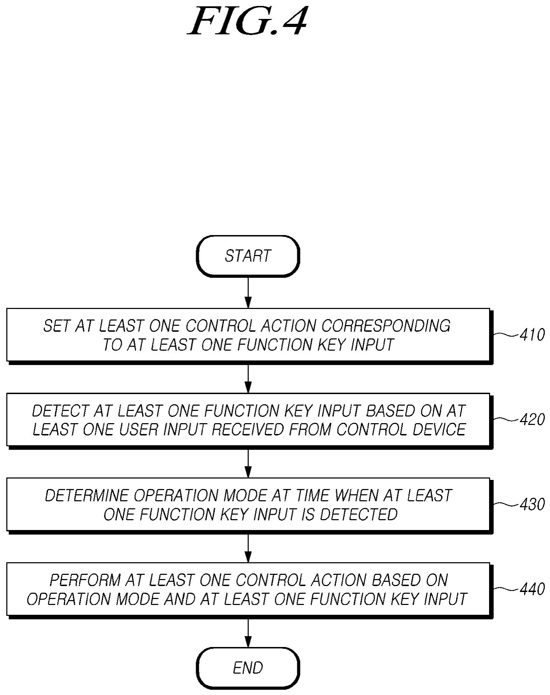

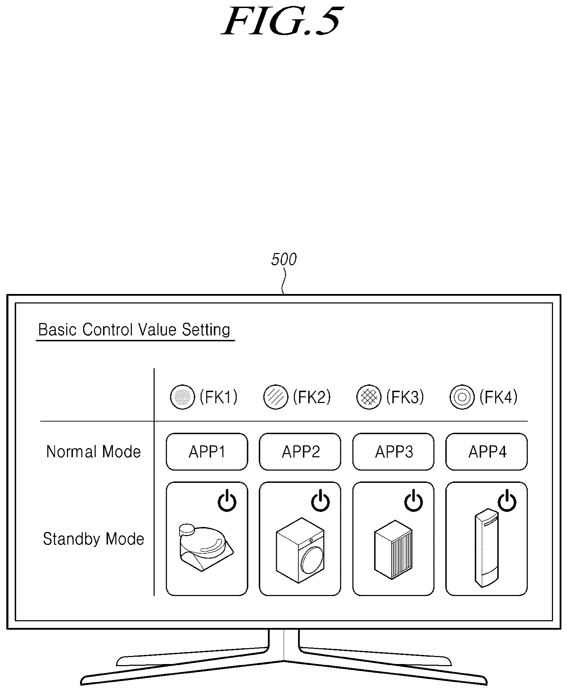

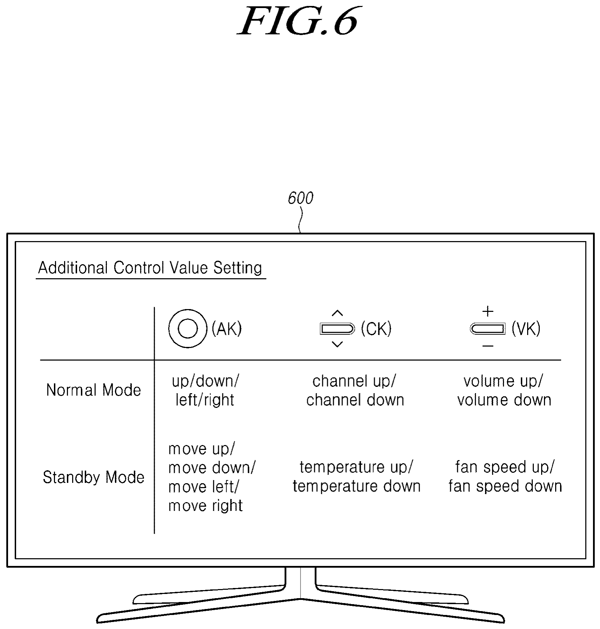

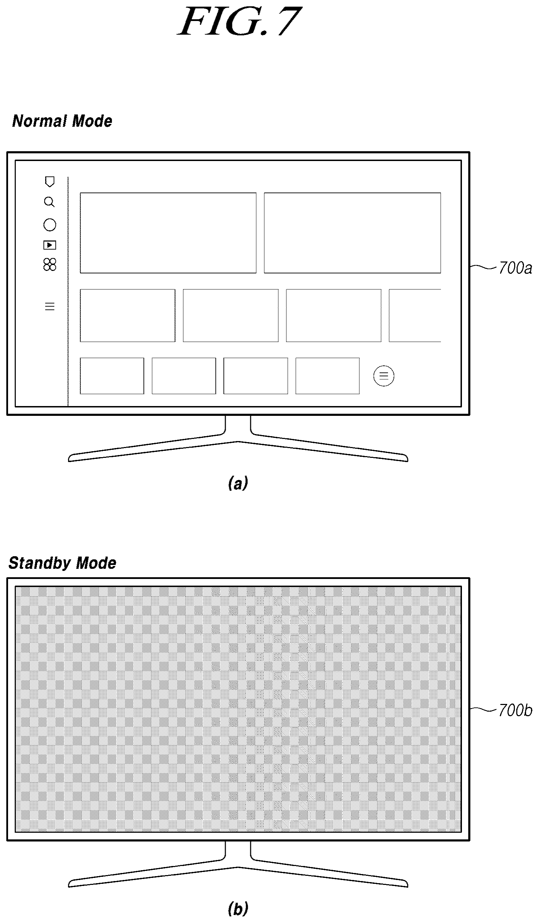

FIG. 4 is a flowchart illustrating operations of a display device according to an embodiment, FIG. 5 illustrates an operation of mapping basic control values to function key inputs according to an embodiment, FIG. 6 illustrates an operation of mapping additional control values to additional key inputs according to an embodiment, and FIG. 7 illustrates operation modes of a display device according to an embodiment.

Referring to FIG. 4, the display device of the disclosure may control an image being displayed according to function key inputs of a control device in a normal mode and control IoT devices according to the function key inputs of the control device in a standby mode.

According to an example, in operation 410, the display device may set at least one control action corresponding to at least one function key input. For example, the display device may set control actions to be performed by the display device according to the at least one function key input.

The at least one control action may include at least one of a first control action for controlling an image being displayed and a second control action for controlling at least one IoT device.

For example, the first control action may be an operation for controlling at least one of channel setting, volume setting, application setting, and playback setting of an image being displayed. For example, the second control action may be an IoT hub function for controlling at least one registered IoT device.

The display device may set the at least one control action corresponding to the at least one function key input for each operation mode of the display device. For example, the operation mode may include at least one of a normal mode for displaying images and a standby mode for not displaying images.

The display device may set at least one control action corresponding to at least one function key input in each of the normal mode and the standby mode. For example, the display device may map control values to the at least one function key input in each of the normal mode and the standby mode.

The control values may include basic control values and additional control values for the at least one IoT device. For example, the basic control values may include power control of the at least one IoT device. For example, the additional control values may include at least one of temperature control, direction control, intensity control, and mode control of the at least one IoT device.

Referring to FIG. 5, a display device 500 may map basic control values to at least one function key input in each of the normal mode and the standby mode.

The display device 500 may map control values for controlling an image being displayed to the at least one function key input in the normal mode.

For example, as illustrated in FIG. 5, a first function key (FK1) input may be mapped to execution of a first application (APP1). For example, a second function key (FK2) input may be mapped to execution of a second application (APP2). For example, a third function key (FK3) input may be mapped to execution of a third application (APP3). For example, a fourth function key (FK4) input may be mapped to execution of a fourth application (APP4).

The display device 500 may match the at least one function key input to the at least one IoT device in the standby mode.

For example, as illustrated in FIG. 5, the first function key (FK1) input may be matched to a first IoT device (e.g., robot cleaner). For example, the second function key (FK2) input may be matched to a second IoT device (e.g., washer). For example, the third function key (FK3) input may be matched to a third IoT device (e.g., air purifier). For example, the fourth function key (FK4) input may be matched to a fourth IoT device (e.g., standing air conditioner).

The display device 500 may map power control of the at least one IoT device to the at least one function key input in the standby mode.

For example, as illustrated in FIG. 5, the first function key (FK1) input may be mapped to power control of the first IoT device (e.g., robot cleaner). For example, the second function key (FK2) input may be mapped to power control of the second IoT device (e.g., washer). For example, the third function key (FK3) input may be mapped to power control of the third IoT device (e.g., air purifier). For example, the fourth function key (FK4) input may be mapped to power control of the fourth IoT device (e.g., standing air conditioner).

Referring to FIG. 6, a display device 600 may map additional control values to at least one additional key input in each of the normal mode and the standby mode.

For example, the at least one additional key input may include at least one of direction key input, channel key input, and volume key input.

The display device 600 may map control values for controlling an image being displayed to the at least one additional key input in the normal mode.

For example, as illustrated in FIG. 6, direction key (AK) input may be mapped to selection movement in four directions: up/down/left/right. For example, channel key (CK) input may be mapped to channel control. For example, volume key (VK) input may be mapped to volume control.

The display device 600 may map at least one of temperature control, direction control, intensity control, and mode control of the at least one IoT device to the at least one additional key input in the standby mode.

For example, as illustrated in FIG. 6, the direction key (AK) input may be mapped to direction control in four directions: up/down/left/right of the IoT devices. For example, the channel key (CK) input may be mapped to temperature control of the IoT devices. For example, the volume key (VK) input may be mapped to intensity control of the IoT devices.

According to an example, in operation 420, the display device may detect the at least one function key input based on at least one user input received from the control device. For example, the control device may detect user action on at least one of function keys, direction keys, channel keys, and volume keys, and generate user input based on the user action. In this case, the display device may detect the at least one function key input included in the user input received from the control device.

According to an example, in operation 430, the display device may determine an operation mode at the time when the at least one function key input is detected. For example, the operation mode may include at least one of the normal mode for displaying images and the standby mode for not displaying images.

As illustrated in FIG. 7(a), the normal mode may mean a state in which power is supplied to all components of a display device 700a. In the normal mode, since each component of the display device 700a operates normally, the display device 700a may normally perform main functions (e.g., broadcast receiving function, image processing function, image display function, etc.) based on input data.

As illustrated in FIG. 7(b), the standby mode may be a mode where power of a display device 700b is saved. In the standby mode, power may be supplied only to a communication unit (not illustrated) of the display device 700b while power supply to other components may be cut off. Therefore, in the standby mode, only network functions of the display device 700b may operate. In the standby mode, the display device 700b may receive control signals (e.g., user input) from the control device or transmit/receive certain data with the control device. For example, the standby mode may be referred to as a suspend mode or a power saving mode (or low power mode (LPM)). For example, in the standby mode, the display device 700b may operate in a power saving mode (e.g., LPM, Off state) so that the screen is turned off. For example, in the standby mode, the display device 700b may operate in an always on display (AoD) mode to display only simple information (e.g., time, weather, location, operation mode).

According to an example, in operation 440, the display device may perform the at least one control action based on the operation mode and the at least one function key input. For example, the display device may perform a first control action for controlling an image being displayed based on the at least one function key input in the normal mode. For example, the display device may perform a second control action for controlling IoT devices based on the at least one function key input in the standby mode.

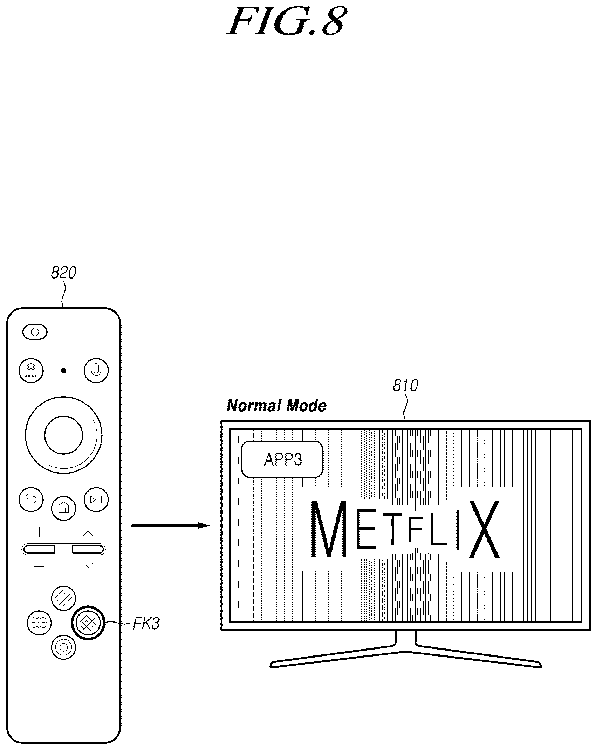

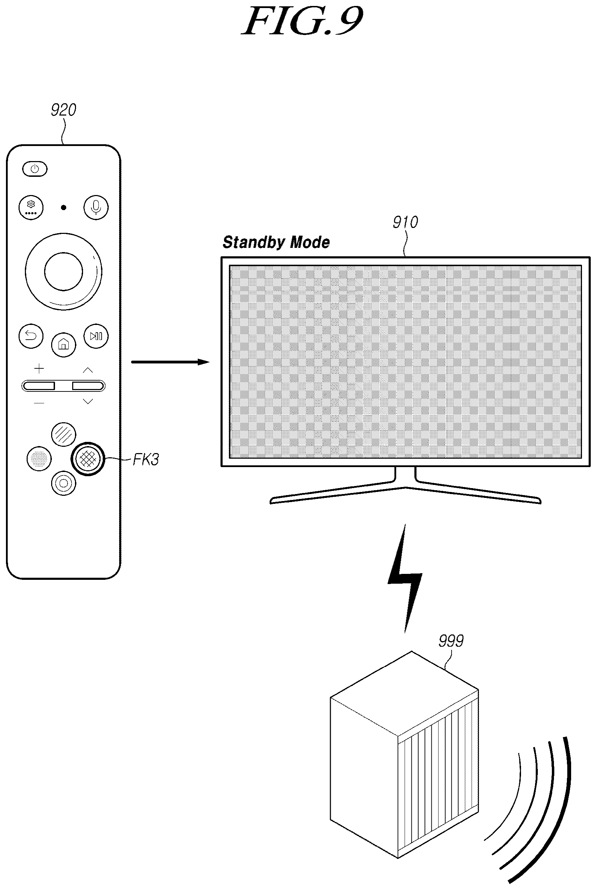

Hereinafter, control actions of a display device 810 according to operation modes are compared and described with reference to FIGS. 8 and 9.

FIG. 8 illustrates an operation of a display device 810 based on function key inputs in the normal mode according to an embodiment. For example, the display device 810 may determine the operation mode at the time when function key input is detected as the normal mode.

Referring to FIG. 8, the display device 810 may control an image being displayed according to function key inputs of a control device 820 in the normal mode. For example, at least one function key (e.g., FK3) input may be mapped to execution of at least one application (e.g., APP3).

In other words, the display device 810 may execute the at least one application (e.g., APP3) based on the at least one function key (e.g., FK3) input in the normal mode.

FIG. 9 illustrates an operation of a display device 910 based on function key inputs in the standby mode according to an embodiment. For example, the display device 910 may determine the operation mode at the time when function key input is detected as the standby mode.

Referring to FIG. 9, the display device 910 may control IoT devices according to function key inputs of a control device 920 in the standby mode. For example, the at least one function key (e.g., FK3) input may be mapped to power control of at least one pre-matched IoT device 999 (e.g., air purifier).

In other words, the display device 810 may control power of the at least one IoT device 999 (e.g., air purifier) based on the at least one function key (e.g., FK3) input in the standby mode.

Further, the at least one additional key input may be mapped to at least one of temperature control, direction control, intensity control, and mode control of the at least one pre-matched IoT device 999 (e.g., air purifier). For example, in the standby mode, at least one of direction key input, channel key input, and volume key input may be mapped to at least one of temperature control action, direction control action, intensity control action, and mode control action for the at least one IoT device.

In other words, the display device 910 may control at least one of temperature, direction, intensity, and mode of the at least one IoT device 999 (e.g., air purifier) based on the at least one additional key input in the standby mode.

Meanwhile, in the standby mode, power control actions of the at least one IoT device 999 based on function keys and temperature control actions, direction control actions, intensity control actions, and mode control actions of the at least one IoT device 999 based on additional keys may be performed continuously within a reference control time. For example, the display device 910 may turn on power of the at least one IoT device 999 based on the at least one function key input. For example, when additional key input is detected within a reference control time (e.g., 3 to 5 seconds) after the time when the function key input is detected, the display device 910, the at least one IoT device 999 may control at least one of temperature, direction, intensity, and mode of the at least one IoT device 999 based on the at least one additional key input.

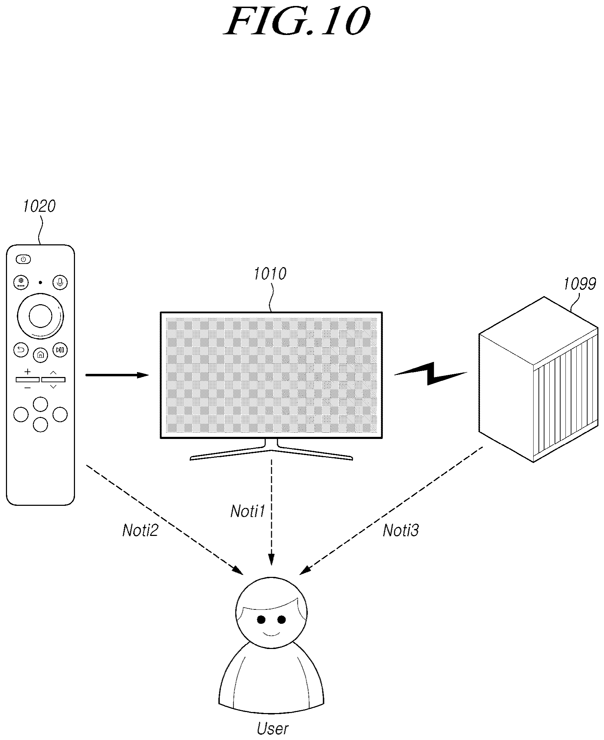

FIG. 10 illustrates a notification function of an Internet of things system according to an embodiment.

Referring to FIG. 10, the IoT system of the disclosure may provide notifications (e.g., Noti1, Noti2, Noti3) about a display device 1010 and at least one IoT device 1099 to the user.

In an embodiment, the display device 1010 may perform a notification function that provides notifications (e.g., Noti1) to the user.

The display device 1010 may provide to the user a feedback notification including performed operations of the at least one IoT device 1099 based on operation information of the at least one IoT device 1099. For example, the display device 1010 may receive operation information from the at least one IoT device 1099 and output sound including performed operations of the at least one IoT device 1099 (e.g., "Turning on the air purifier. ") through a speaker. As another example, the display device 1010 may receive operation information from the at least one IoT device 1099 and display an image including performed operations of the at least one IoT device 1099 (e.g., "Turning on the air purifier. "). For example, in the standby mode, the display device 1010 may operate in an always on display (AoD) mode to display an image including performed operations of the at least one IoT device 1099 (e.g., "Turning on the air purifier. ") for a predetermined time.

Further, the display device 1010 may provide to the user a mode notification including the operation mode of the display device 1010. For example, the display device 1010 may provide to the user the mode notification about the operation mode by changing the color of an LED lamp based on the operation mode. For example, in the standby mode, the display device 1010 may provide a notification about the standby mode to the user by displaying a predetermined color different from the normal mode on the LED lamp. As another example, the display device 1010 may display the mode notification including the operation mode as an image (e.g., "standby mode," "control mode"). For example, in the standby mode, the display device 1010 may operate in the always on display (AoD) mode and display an image indicating the standby mode (e.g., "standby mode," "control mode") for a predetermined time based on receiving a function key input and an additional key input.

In an embodiment, the control device 1020 may perform a notification function that provides notifications (e.g., Noti2) to the user.

The control device 1020 may provide to the user a feedback notification including performed operations of the at least one IoT device 1099 based on operation information of the at least one IoT device 1099. For example, the control device 1020 may receive operation information of the at least one IoT device 1099 from the display device 1010. For example, the control device 1020 may provide a feedback notification to the user by outputting predetermined light through an LED module (LM) based on the at least one IoT device 1099 being powered on. For example, the control device 1020 may provide a feedback notification to the user by generating predetermined vibration through a vibration module (VM) based on the at least one IoT device 1099 being powered on.

Further, the control device 1020 may provide to the user a mode notification including the operation mode of the display device 1010. For example, the control device 1020 may receive information about the operation mode from the display device 1010. For example, the control device 1020 may provide a feedback notification to the user by outputting predetermined light through the LED module (LM) based on the operation mode of the display device 1010. For example, in the standby mode, the control device 1020 may provide a notification about the standby mode to the user by outputting light of a different color from the normal mode through the LED module. As another example, the control device 1020 may provide a feedback notification to the user by generating predetermined vibration via the vibration module (VM) based on the operation mode of the display device 1010. For example, in the standby mode, the control device 1020 may receive user action on at least one of function keys, direction keys, channel keys, and volume keys, and provide a notification about the standby mode to the user by generating predetermined vibration via the vibration module (VM).

In an embodiment, the at least one IoT device 1099 may perform a notification function that provides notifications (e.g., Noti3) to the user. The at least one IoT device 1099 may provide to the user a feedback notification including performed operations of the at least one IoT device 1099 based on the control action of the display device 1010. For example, the at least one IoT device 1099 may perform operations corresponding to control actions of the display device 1010. The at least one IoT device 1099 may output sound including performed operations (e.g., "Turning on the power.") through a speaker.

As such, the display device of the disclosure may control an image being displayed according to function key inputs of the control device in the normal mode and control IoT devices according to the function key inputs of the control device in the standby mode.

Therefore, the display device of the disclosure may constantly provide IoT hub functions regardless of the operation mode, thereby extending the utilization range of the control device and maximizing the convenience of the IoT hub function of the display device.

The display device according to various embodiments of the disclosure may be one of various types of electronic devices. The display devices may include, for example, a portable communication device (e.g., a smartphone), a computer device, a portable multimedia device, a portable medical device, a camera, a wearable device, or a home appliance. The display devices according to an embodiment of the disclosure are not limited to the above-described devices.

It should be appreciated that various embodiments of the present disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an applicationspecific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device 200 described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machinereadable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A display device (210), comprising:
memory (212) storing at least one instruction; and
at least one processor (213) executing the at least one instruction, wherein the at least one processor is configured to:
set at least one control action corresponding to at least one function key input;
detect the at least one function key input based on at least one user input received from a control device;
determine an operation mode at a time when the at least one function key input is detected; and
perform the at least one control action based on the operation mode and the at least one function key input, and
wherein the at least one control action includes at least one of a first control action for controlling an image being displayed and a second control action for controlling at least one Internet of things (IoT) device.

2. The display device of claim 1, wherein the operation mode includes at least one of a normal mode for displaying an image and a standby mode for not displaying an image.

3. The display device of claim 2, wherein the at least one processor is configured to:
perform the first control action based on the at least one function key input in the normal mode; and
perform the second control action based on the at least one function key input in the standby mode.

4. The display device of any one of claims 1 to 3, wherein the at least one processor is configured to:
match the at least one IoT device to the at least one function key input; and
map a control value to the at least one function key input.

5. The display device of claim 4,
wherein the control value includes a basic control value and an additional control value for the at least one IoT device,
wherein the basic control value includes power control of the at least one IoT device, and
wherein the additional control value includes at least one of temperature control, direction control, intensity control, and mode control of the at least one IoT device.

6. The display device of claim 4, wherein the at least one processor is configured to:
map power control of the at least one IoT device to the at least one function key input; and
map at least one of temperature control, direction control, intensity control, and mode control of the at least one IoT device to at least one of a direction key input, a channel key input, and a volume key input.

7. The display device of any one of claims 1 to 3, wherein the at least one processor is configured to perform a power control action for the at least one IoT device based on the at least one function key input in a standby mode.

8. The display device of claim 7, wherein the at least one processor is configured to perform at least one of a temperature control action, a direction control action, an intensity control action, and a mode control action for the at least one IoT device based on at least one of a direction key input, a channel key input, and a volume key input in the standby mode.

9. A control device (220) comprising:
memory (310) storing at least one instruction; and
at least one processor (320) executing the at least one instruction, wherein the at least one processor is configured to:
detect a user action for at least one of a function key, a direction key, a channel key, and a volume key;
generate a user input including at least one of a function key input, a direction key input, a channel key input, and a volume key input based on the user action; and
output the user input to a display device,
wherein the display device performs at least one control action based on the function key input, and
wherein the at least one control action includes at least one of a first control action for controlling an image being displayed in a normal mode and a second control action for controlling at least one IoT device in a standby mode.

10. The control device of claim 9,
wherein the function key input is mapped to power control of the at least one IoT device, and
wherein at least one of the direction key input, the channel key input, and the volume key input is mapped to at least one of temperature control, direction control, intensity control, and mode control of the at least one IoT device.

11. The control device of claim 9 or 10, wherein the at least one processor is configured to control power of the at least one IoT device based on the user action for the function key in the standby mode.

12. The control device of claim 11, wherein the at least one processor is configured to control at least one of a temperature, a direction, an intensity, and a mode of the at least one IoT device based on the user action for at least one of the direction key, the channel key, and the volume key in the standby mode.

13. A method for controlling an IoT device using a display device, the method comprising:
setting at least one control action corresponding to at least one function key input (410);
detecting the at least one function key input based on at least one user input received from a control device (420);
determining an operation mode at a time when the at least one function key input is detected (430); and
performing the at least one control action based on the operation mode and the at least one function key input (440),
wherein the at least one control action includes at least one of a first control action for controlling an image being displayed and a second control action for controlling at least one IoT device.

14. The method of claim 13, wherein the operation mode includes at least one of a normal mode for displaying an image and a standby mode for not displaying an image.

15. The method of claim 14, wherein the performing of the at least one control action includes:
performing the first control action based on the at least one function key input in the normal mode; and
performing the second control action based on the at least one function key input in the standby mode.
